(19) Europäisches Patentamt

European Patent Office

Office européen des brevets

(11) **EP 1 283 121 A2**

(12) **EUROPÄISCHE PATENTANMELDUNG**

(43) Veröffentlichungstag:
   **12.02.2003  Patentblatt 2003/07**

(51) Int Cl.⁷: **B60L 11/18**, G08G 1/01,
   H02J 7/00

(21) Anmeldenummer: **02013208.0**

(22) Anmeldetag: **15.06.2002**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **08.08.2001  DE 10139050**

(71) Anmelder: **ROBERT BOSCH GMBH**
   **70442 Stuttgart (DE)**

(72) Erfinder:
   • **Hoetzer, Dieter, Dr.**
     **71701 Schwieberdingen (DE)**
   • **Bischoff, Claus**
     **70469 Stuttgart (DE)**

(54) **Verfahren und Vorrichtung zur Durchführung eines automatischen Ladezustandsausgleichs**

(57)   Die Erfindung betrifft ein Verfahren und eine Vorrichtung zur Durchführung eines automatischen Ladezustandsausgleichs. Dabei werden statistisch Daten über die Fahrgewohnheiten des Fahrzeughalters erfasst. Diese Daten werden nach der Detektion der Notwendigkeit eines Ladezustandsausgleichs dazu verwendet, einen optimalen Zeitpunkt für die Initiierung einer Vorbereitungsphase für den Ladezustandsausgleich und der nachfolgenden Durchführungsphase bereitzustellen.

EP 1 283 121 A2

**Beschreibung**

Die Erfindung betrifft ein Verfahren und eine Vorrichtung zur Durchführung eines automatischen Ladezustandsausgleichs.

Stand der Technik

Angesichts einer verschärften Umweltgesetzgebung haben die meisten Automobilhersteller Prototypenfahrzeuge mit Hybridantrieben entwickelt. Derartige Fahrzeuge verfügen neben einem Kraftstofftank noch über einen elektrischen Energiespeicher zur Versorgung der elektrischen Antriebsaggregate.

Im Fahrbetrieb kommt diesem zusätzlichen Energiespeicher eine viel zentralere Rolle zu als bei konventionellen Fahrzeugen. So soll er Funktionen wie eine Bremsenergierekuperation, elektrisches Fahren, Boostbetrieb und den Antrieb elektrischer Nebenaggregate bei einem Motorstillstand sowie einen Motorstart ermöglichen.

Die hohen Anforderungen, die diese Funktionen an die Batterie stellen, machen einen Einsatz von Hochleistungsbatterien erforderlich.

In vielen Fällen wird in diesem Zusammenhang eine Nickelmetallhydrid-Batterie verwendet. Derartige Batterien verfügen über eine sehr hohe Leistungsdichte und sind sehr gut zyklisierbar. So sind sie in der Lage, im Kapazitätsbereich zwischen 30% und 70% mit der vollen Lade- und Entladeleistung zu arbeiten. Erreicht die Batterie Ladezustände von über 90%, dann müssen die Ladeströme stark heruntergeregelt werden. In diesen Zuständen können die Batteriezellen keine elektrische Energie mehr aufnehmen. Ihr Innenwiderstand ist derart hoch, dass sie nur noch Wärme erzeugen. Würde man die Batterie mit zu starken Ladeströmen beaufschlagen, dann wäre man nicht mehr in der Lage, die entsprechenden Wärmeströme über eine Kühlungsvorrichtung abzuführen und die Zellen würden zerstört.

Aufgrund von Fabrikationstoleranzen und lokal schwankenden Umwelteinflüssen neigen die einzelnen Zellen von NiMH-Batterien besonders bei stark zyklischer Belastung zum Driften, d. h. der Ladezustand der einzelnen Zellen läuft auseinander. Wird der Drift im Betrieb zu groß, schränkt dieser die Leistungsfähigkeit der Batterie stark ein. Die Ursache hierfür wird nachfolgend anhand einer vereinfachten 3-Zellen-Batterie erläutert. In der Regel arbeitet ein der Batterie zugeordnetes Batteriemanagement mit einem gemittelten Ladezustandswert SOC*, der dem Mittelwert der Ladezustände der Batteriezellen entspricht. Dieser gemittelte Ladezustandswert sei zu SOC*=70% angenommen. Bei einer idealen Batterie entspräche der Ladezustandswert der Zellen 1 - 3 auch dem gemittelten Ladezustandswert SOC*:

$$SOC_1 = SOC_2 = SOC_3 = SOC^* \qquad (1)$$

Für eine reale Batterie tritt aber aus den oben genannten Gründen ein gewisser Drift auf, d. h. während das Batteriemanagement nach wie vor mit dem gemittelten Ladezustandswert SOC*=70% arbeitet, weichen die Ladezustandswerte der einzelnen Zellen voneinander ab:

$$SOC_1 \neq SOC_2 \neq SOC_3 \neq SOC^* \qquad (2)$$

Beispielsweise haben die Ladezustandswerte der einzelnen Batteriezellen beim Vorliegen geringen Drifts die folgenden Werte: $SOC_1 = 75\%$, $SOC_2 = 70\%$, $SOC_3 = 65\%$. Beim Vorliegen starken Drifts laufen die Ladezustandswerte der Batteriezellen weiter auseinander und haben beispielsweise folgende Werte: $SOC_1 = 95\%$, $SOC_2 = 70\%$, $SOC_3 = 45\%$.

Solange sich der Drift in engen Grenzen bewegt, hat er keine negativen Auswirkungen auf den Betrieb der Batterie. Wird die Batterie aber längere Zeit stark zyklisch beansprucht, dann kann auch bei mittleren Ladezustandswerten die nach oben weglaufende Batteriezelle 1 an das Überladelimit stoßen. Da dieser Zustand für die Batterie sicherheitskritisch ist, regelt das Batteriemanagement den Ladestrom ab. Folglich kann die Batterie, die im Mittel nur 70% ihrer Nominalladung erreicht hat, nicht mehr weiter geladen werden.

Da dies eine sehr starke Einschränkung des Betriebsverhaltens bedeuten würde, nimmt man dann, wenn das Batteriemanagement einen starken Drift detektiert hat, eine Ausgleichsladung vor. Bei einer solchen Ausgleichsladung werden die nachlaufenden Batteriezellen mit einem stark heruntergeregelten Strom $I_{Min}$ bis an die obere Ladezustandsschwelle nachgeführt.

Bei den bisher in Fahrzeugen eingesetzten NiMH-Batterien hat man diese Ausgleichsladung mit Hilfe eines an das Festnetz angeschlossenen Ladegerätes im Rahmen eines Fahrzeugservices vorgenommen. Diese aufwendige Prozedur ist erforderlich, da der Minimalstrom $I_{Min}$ so definiert anliegen muss, dass die von den bereits voll geladenen Zellen abgegebene Wärme jederzeit über die Kühlung abgeführt werden kann.

Vorteile der Erfindung

Ein Verfahren und eine Vorrichtung gemäß der Erfindung weisen demgegenüber den Vorteil auf, dass der Ladezustandsausgleich zwischen den Batteriezellen bei Bedarf vollautomatisch erfolgt, ohne dass es einer Werkstatt und eines an das Festnetz angeschlossenen Ladegeräts bedarf. Dieser vollautomatische Ladezustandsausgleich erfolgt mit Hilfe des Bordnetzgenerators und einer Sekundärbatterie des jeweiligen Fahrzeugs. Die Ablaufsteuerung und die Überwachung des Ladezustandsausgleichs wird von der Fahrzeugsteuerung und vom Batteriemanagement übernommen. Dabei arbeitet das Bordnetz völlig autark.

Im Rahmen des Ladezustandsausgleichs gibt es nach der Detektion der Notwendigkeit eines Ladezustandsausgleichs eine Vorbereitungsphase und eine Durchführungsphase. In der Vorbereitungsphase, die während des Fahrbetriebes vorliegt, befindet sich das Fahrzeug in einem eingeschränkten Betriebsmodus. In der Durchführungsphase, die bei stehendem und abgeschaltetem bzw. verriegeltem Fahrzeug vorgenommen wird, erfolgt die Zuführung eines Ladestroms von einer Sekundärbatterie des Fahrzeugs zur Fahrzeugbatterie, um den Ladezustandsausgleich herbeizuführen. Die Durchführungsphase sollte so schnell wie möglich der Vorbereitungsphase folgen, damit schnellstmöglich wieder ein normaler, nicht eingeschränkter Fahrbetrieb des Fahrzeugs möglich ist. Da eine Durchführungsphase voraussetzt, dass das Fahrzeug längere Zeit abgestellt ist, wird gemäß der vorliegenden Erfindung durch eine statistische Auswertung der Fahrgewohnheiten des Fahrzeughalters eine Entscheidungshilfe für das Einleiten einer Vorbereitungs- und einer Durchführungsphase bereitgestellt. Dies erlaubt es in vorteilhafter Weise, für die Vorbereitung und Durchführung eines Ladezustandsausgleichs einen Zeitraum auszuwählen, bei welchem mit großer Wahrscheinlichkeit davon ausgegangen werden kann, dass kein Abbruch des Ladezustandsausgleichs notwendig ist. Weiterhin kann sichergestellt werden, dass der Zeitraum, in welchem die Fahrzeugfunktionalität eingeschränkt ist, so klein wie möglich ist.

Vorzugsweise werden zur statistischen Erfassung der Fahrgewohnheiten Informationen ausgewertet, die von einem ohnehin vorhandenen Navigationssystem des Fahrzeugs und einem ohnehin vorhandenen Bordcomputer abgeleitet werden. Dadurch bleibt der zur Realisierung der Erfindung zu treibende Zusatzaufwand gering.

Zeichnung

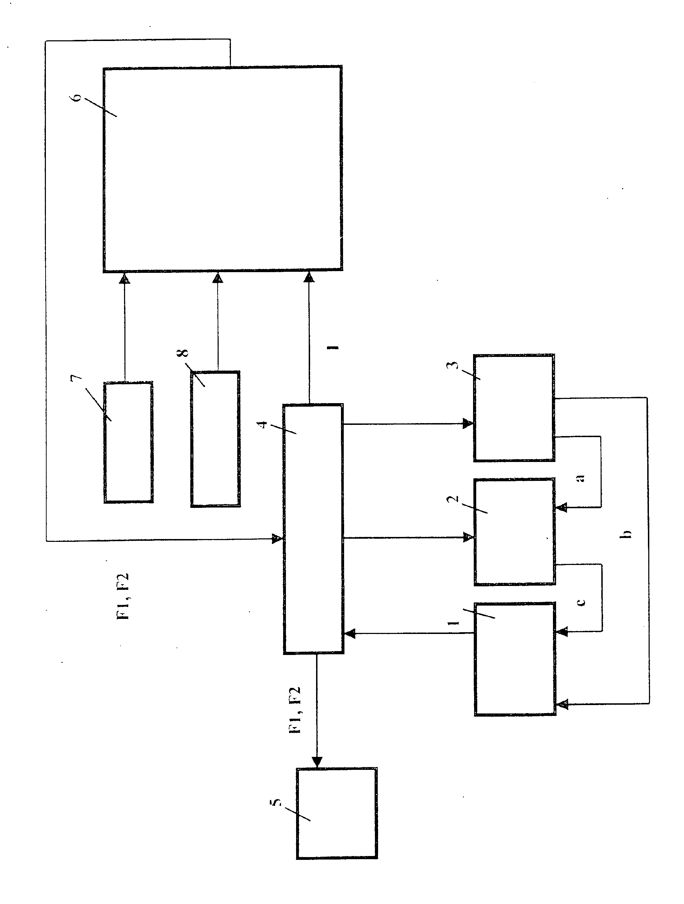

Nachfolgend wird anhand der Figur ein Ausführungsbeispiel für die Erfindung näher erläutert.

Beschreibung

Bei dem nachfolgenden Ausführungsbeispiel wird davon ausgegangen, dass in einem Kraftfahrzeug eine drei Batteriezellen aufweisende Hochleistungs- bzw. Traktionsbatterie vorgesehen ist, wobei im Fahrzeugbetrieb der Ladezustand der Batteriezellen aufgrund einer zyklischen Belastung stark auseinanderläuft. Während dieses Fahrzeugbetriebes wird eine an Bord des Fahrzeugs befindliche Sekundärbatterie durch den Fahrzeuggenerator geladen. Diese Sekundärbatterie kann deutlich kleiner dimensioniert sein als die Hochleistungs- bzw. Traktionsbatterie, muss aber über einen ausreichenden Energieinhalt verfügen. Bei dieser Sekundärbatterie kann es sich beispielsweise um eine AGM-Bleisäurebatterie handeln.

Während des Fahrzeugbetriebes erfolgt auch eine Ladung der Hochleistungs- bzw. Traktionsbatterie, die als NiMH-Batterie ausgebildet ist. Sie verlässt bei dieser Ladung den Sollladezustand für den Normalbetrieb, der im Regelfall bei 50% bis 60% liegt und erreicht einen kritischen Ladezustandsbereich, der bei ca. 95% liegt. Ist dieser Bereich erreicht, dann werden die Ladeströme vom Batteriemanagement so eingestellt, dass ein möglichst hoher Ladewirkungsgrad erzielt wird.

Da die NiMH-Batterie in diesem Ladezustandsbereich keine größeren Ladeströme mehr aufnehmen kann, muss das Batteriemanagement die Batterieladeströme strikt begrenzen. Dies hat zur Folge, dass die Fahrzeugsteuerung vorübergehend auf höhere Batterieströme bedingende Fahrzeugfunktionen, beispielsweise auf eine Bremsenergierekuparation, verzichten muss. In Entladerichtung bleibt die Batterie allerdings voll einsatzfähig, beispielsweise zu einem Starten des Motors.

Erkennt das Batteriemanagement die Notwendigkeit eines Ladezustandsausgleichs, dann kann dieser nach einer entsprechenden Vorbereitung durchgeführt werden. Dabei wird detektiert, dass das Fahrzeug über einen längeren Zeitraum abgestellt ist, beispielsweise durch eine Detektion, ob das Fahrzeug im abgestellten Zustand verriegelt wird. Anschließend werden über einen Widerstand die zum Heranführen bzw. Aufladen der einen geringeren Ladezustand aufweisenden Zellen erforderlichen Minimalströme von der Sekundärbatterie an die NiMH-Batterie abgegeben. Erkennt das Batteriemanagement, dass alle Zellen der NiMH-Batterie ihre obere Ladezustandsschwelle erreicht haben, dann schaltet es wieder auf Normalbetrieb um.

Gemäß der vorliegenden Erfindung wird durch eine statistische Erfassung von Daten über die Fahrgewohnheiten des Fahrzeughalters bzw. von Daten über die Fahrtzeiten, Stillstandszeiten und Stillstandsorte des Fahrzeugs eine Entscheidungshilfe dafür bereitgestellt, wann nach der Detektion der Notwendigkeit eines Ladezustandsausgleichs die notwendige Vorbereitungsphase und die Durchführungsphase eingeleitet werden können.

Dies wird nachfolgend anhand des in der Figur gezeigten Blockdiagramms näher erläutert.

Die dort gezeigte Vorrichtung weist als Fahrzeugbatterie eine 26 Ah-NiMH-Traktionsbatterie 1 auf, welche drei Batteriezellen hat, bezüglich derer ein Ladezustandsausgleich durchgeführt werden soll. Weiterhin ist im Fahrzeug eine Sekundärbatterie 2 vorgesehen, bei der es sich um eine Bleisäurebatterie handeln kann. Ferner ist ein Generator 3 gezeigt, der während des Fahrtbetriebes die genannten Batterien lädt, wie es in der Figur durch die Verbindungen a und b angedeutet ist.

Weiterhin weist die gezeigte Vorrichtung ein Modul 6 auf. Dieses Modul ist dazu vorgesehen, Daten über die Fahrgewohnheiten des Fahrzeughalters statistisch zu erfassen. Anhand der statistisch erfassten Daten ist das Modul 6 dazu in der Lage, einer Steuereinheit des Fahrzeugs, die das Batteriemanagement 4 und das Fahrzeugsteuergerät 5 umfasst, Entscheidungshilfen bzw. Freigabesignale zur Initiierung der Vorbereitungsphase für den Ladezustandsausgleich und für die der Vorbereitungsphase nachfolgende Durchführungsphase bereitzustellen.

Das Modul 6 bezieht Eingangssignale vom Bordcomputer 7 und einem Navigationssystem 8 des Fahrzeugs. Vom Bordcomputer 7 werden dem Modul 6 Informationen über die momentane Uhrzeit, den Wochentag und die Fahrtzeit seit dem letzten Anlassen bzw. der letzten Inbetriebnahme des Fahrzeugs übermittelt. Das Navigationssystem 8, das auf der Basis von GPS-Signalen arbeitet, liefert dem Modul 6 Informationen über die momentane Position des Fahrzeugs.

Unter Verwendung dieser und ggf. weiterer Informationen ermittelt das Modul 6 während des normalen Fahrzeugbetriebes Zeiten und Orte, zu denen bzw. an denen ein Ladezustandsausgleich erfolgen kann. Solche Orte sind insbesondere Abstellplätze des Fahrzeugs, an denen das Fahrzeug häufig für längere Zeit abgestellt ist. Beispiele hierfür sind die eigene Garage, der eigene Stellplatz oder auch der Parkplatz an der Arbeitsstelle des Fahrzeughalters.

Die Ermittlung geeigneter Orte für einen Ladezustandsausgleich geschieht beispielsweise wie folgt:

In einem ersten Schritt werden die am häufigsten angefahrenen Stillstandsorte festgehalten. Diese werden in Form einer Tabelle notiert, wobei die Reihenfolge der Stillstandsorte in der Tabelle abhängig von der Anzahl der jeweiligen Anfahrten ist.

Nachfolgend wird in einem zweiten Schritt ausgewertet, wie lange die durchschnittliche Stillstandsdauer an den erfassten, am häufigsten angefahrenen Stillstandsorten ist.

Überschreitet die ermittelte durchschnittliche Stillstandsdauer eines Stillstandsortes die für einen Ladezustandsausgleich erforderliche Zeitdauer, dann wird dieser Stillstandsort als ein geeigneter Ort für einen Ladezustandsausgleich angesehen und als solcher in einem Speicher des Moduls 6 hinterlegt. Die für den Ladezustandsausgleich erforderliche Zeitdauer wurde bereits im voraus anhand von Messungen ermittelt und bereits bei der Programmierung bzw. Fertigung des Moduls 6 dort abgespeichert.

Unterschreitet hingegen die ermittelte durchschnittliche Stillstandsdauer eines Stillstandsortes die für einen Ladezustandsausgleich erforderliche Zeitdauer, dann wird dieser Stillstandsort in der Tabelle gelöscht und durch einen in der Häufigkeitsfolge nachfolgenden Stillstandsort ersetzt.

Erlaubt die ermittelte durchschnittliche Stillstandsdauer mehrerer Stillstandsorte einen Ladezustandsausgleich, so können die Tageszeit und der Wochentag des Erreichens eines Stillstandsortes weitere Kriterien dafür darstellen, ob an einem Stillstandsort zum jeweiligen Zeitpunkt ein Ladezustandsausgleich durchgeführt werden kann oder nicht. Ein weiteres Kriterium kann auch der Startort des Fahrzeugs sein, von welchem aus ein Stillstandsort üblicherweise angefahren wird. Die Entfernung des Startortes vom Stillstandsort erlaubt Rückschlüsse auf die notwendige Fahrtzeit zwischen dem momentanen Standort und dem Stillstandsort und liefert damit auch Informationen darüber, ob diese Fahrtzeit für die Vorbereitungsphase des Ladezustandsausgleichs ausreicht oder nicht.

Beispielsweise handelt es sich bei der Fahrt von der Arbeitsstelle zum heimischen Abstellort des Fahrzeugs um eine sich an Werktagen regelmäßig wiederholende Fahrstrecke. Durch die vorgenommene statistische Auswertung ist bekannt, wie lange die Fahrt von der Arbeitsstelle zum heimischen Abstellort dauert. Dadurch ist das Modul 6 dazu in der Lage, der Steuereinheit 4, 5 des Fahrzeugs zu geeigneten Zeitpunkten Freigabesignale zuzuleiten, aufgrund derer die Vorbereitungsphase für einen Ladezustandsausgleich in die Wege geleitet werden kann. Auf diese Weise kann sichergestellt werden, dass vorbereitende Maßnahmen, die die Fahrzeugfunktionalität einschränken, erst kurz vor dem Abstellen des Fahrzeugs durchgeführt werden. Zu diesen vorbereitenden Maßnahmen gehört beispielsweise ein Außerkraftsetzen der Bremsenergierekuperation.

Ein wesentlicher Vorteil der Erfindung besteht demnach darin, dass durch die statistische Erfassung der Fahrgewohnheiten des Fahrzeughalters ein Zeitpunkt für die Vorbereitung und die Durchführung des Ladezustandsausgleichs gewählt werden kann, bei dem mit hoher Wahrscheinlichkeit davon ausgegangen werden kann, dass der Ladezustandsausgleich auch vollständig beendet werden kann.

Dem Batteriemanagement 4 werden während des Fahrbetriebes ständig von der Fahrzeugbatterie 1 Informationen über die Ladezustände von deren einzelnen Zellen zugeführt. Laufen aufgrund starker zyklischer Belastung die Ladezustände dieser Zellen der Fahrzeugbatterie 1 weit auseinander, dann erkennt das Batteriemanagement 4 die Notwendigkeit eines Ladezustandsausgleichs und führt dem Modul 6 ein Initialisierungssignal I zu.

Daraufhin vergleicht das Modul 6 so lange, wie es notwendig ist, die aktuelle Fahrzeugposition und die Uhrzeit mit hinterlegten Daten für geeignete Stillstandsorte. Wird anhand dieses Vergleiches erkannt, dass höchstwahrscheinlich ein geeigneter Stillstandsort angefahren wird und dass auch die benötigte Fahrzeit zu diesem Stillstandsort zur Durchführung der Vorbereitungsphase ausreicht, dann übermittelt das Modul 6 an das Batteriemanagement 4 ein Freigabesignal FI, welches vom Batteriemanagement 4 auch an das Fahrzeugsteuergerät 5 weitergegeben wird.

Das Batteriemanagement 4 und das Fahrzeugsteuergerät 5, die zusammen die Funktion einer Steuereinheit ausüben, leiten dann die Vorbereitungsphase ein. Das Batteriemanagement 4 gibt dem Generator 3 einen Auftrag zum Laden der Sekundärbatterie 2 und zum Anheben des Ladezustands der Fahrzeug- bzw. Traktionsbatterie 1. Weiterhin schränkt das Fahrzeugsteuergerät 5 die Fahrzeugfunktionalität ein, wobei Fahrzeugfunktionen, die hohe Batterieladeströme bedingen, außer Kraft gesetzt werden. Zu diesen Fahrzeugfunktionen, die außer Kraft gesetzt werden, gehört beispielsweise eine Bremsenergierekuperation.

Hat das Fahrzeug dann den Stillstandsort erreicht, übermittelt das Modul 6 der Steuereinheit 4, 5 ein zweites Freigabesignal F2. Liegt dieses der Steuereinheit vor und wird auch erkannt, dass das Fahrzeug abgestellt und verriegelt ist, dann wird die

Durchführungsphase des Ladezustandsausgleichs in die Wege geleitet. Dazu gibt das Batteriemanagement der Sekundärbatterie 2 einen Auftrag, aufgrund dessen von der Sekundärbatterie 2 ein Ladestrom über die Verbindung c an die Fahrzeug- bzw. Traktionsbatterie 1 geführt wird. Mittels dieses Ladestroms erfolgt ein Nachladen bzw. Nachführen der einzelnen Zellen der Batterie 1 so lange, bis alle Zellen der Batterie einen gewünschten Ziel-Ladezustand erreicht haben. Der erforderliche Ladestrom liegt etwa im Bereich von 3 - 5 A. Da sich während der Durchführungsphase des Ladezustandsausgleichs das Bordnetz des Fahrzeugs im Ruhezustand befindet, in welchem keine dynamischen Belastungen durch andere Verbraucher auftreten, kann der erforderliche Ladestrom sehr gut und genau eingestellt werden.

Erkennt das Batteriemanagement, dass die Batteriezellen ihren Ziel-Ladezustand erreicht haben, dann beendet es den Ladezustandsausgleich.

**Patentansprüche**

1. Verfahren zur Durchführung eines Ladezustandsausgleichs zwischen den Zellen einer Fahrzeugbatterie mit folgenden Schritten:

   - statistisches Erfassen von Daten über die Fahrtzeiten, Stillstandszeiten und Stillstandsorte des Fahrzeugs,
   - Detektion der Notwendigkeit eines Ladezustandsausgleichs,
   - Initiierung einer Vorbereitungsphase für den Ladezustandsausgleich in Abhängigkeit von den statistisch erfassten Daten und
   - Initiierung einer Durchführungsphase für den Ladezustandsausgleich in Abhängigkeit von den statistisch erfassten Daten.

2. Verfahren nach Anspruch 1,
   **dadurch gekennzeichnet, dass**
   zum statistischen Erfassen der Daten Informationen über die Fahrzeugposition von einem Navigationssystem des Fahrzeugs abgeleitet werden.

3. Verfahren nach Anspruch 1 oder 2,
   **dadurch gekennzeichnet, dass**
   das zum statistischen Erfassen der Daten Informationen vom Bordcomputer des Fahrzeugs abgeleitet werden.

4. Verfahren nach Anspruch 3,
   **dadurch gekennzeichnet, dass**
   die vom Bordcomputer abgeleiteten Daten Informationen über die Uhrzeit, den Wochentag und/oder die Fahrtzeit seit dem Anlassen des Fahrzeugs enthalten.

5. Verfahren nach einem der vorhergehenden Ansprüche,
   **dadurch gekennzeichnet, dass**

   - die am häufigsten angefahrenen Stillstandsorte erfasst,
   - die durchschnittliche Stillstandsdauer an den am häufigsten angefahrenen Stillstandsorten ermittelt,
   - für jeden der am häufigsten angefahrenen Stillstandsorte überprüft wird, ob die zugehörige Stillstandsdauer größer ist als die zu einem Ladezustandsausgleich benötigte Zeitdauer, und
   - wenn dies der Fall ist, der jeweilige Stillstandsort als geeigneter Ort für die Durchführungsphase hinterlegt wird.

6. Verfahren nach einem der vorhergehenden Ansprüche,
   **dadurch gekennzeichnet, dass**
   in der Vorbereitungsphase eine Sekundärbatterie des Fahrzeugs aufgeladen wird, die Fahrzeugbatterie in den Ladebereitschaftszustand gebracht wird und Fahrzeugfunktionen, die hohe Batterieladeströme bedingen, deaktiviert werden.

7. Verfahren nach einem der vorhergehenden Ansprüche,
   **dadurch gekennzeichnet, dass**
   in der Durchführungsphase ein Ladestrom von der Sekundärbatterie zur Fahrzeugbatterie geführt wird.

8. Verfahren nach einem der vorhergehenden Ansprüche,
   **dadurch gekennzeichnet, dass**
   die Initiierung der Durchführungsphase nur dann erfolgt, wenn das Fahrzeug im abgestellten Zustand verriegelt ist.

9. Verfahren nach einem der vorhergehenden Ansprüche,
**dadurch gekennzeichnet, dass**
die einzelnen Schritte des Verfahrens automatisch ablaufen.

10. Verfahren nach Anspruch 9,
**dadurch gekennzeichnet, dass**
die einzelnen Schritte des Verfahrens automatisch unter Steuerung durch eine Steuereinheit ablaufen.

11. Verfahren nach Anspruch 10,
**dadurch gekennzeichnet, dass**
die einzelnen Schritte des Verfahrens automatisch unter Steuerung durch eine Steuereinheit ablaufen, welche das Batteriemanagement und das Fahrzeugsteuergerät des Fahrzeugs aufweist.

12. Vorrichtung zur Durchführung eines Ladezustandsausgleichs zwischen den Zellen einer Fahrzeugbatterie, mit

- einer mehrere Zellen aufweisenden Fahrzeugbatterie (1),
- einer fahrzeugseitigen Sekundärbatterie (2),
- einer fahrzeugseitigen Steuereinheit (4, 5) zur Detektion der Notwendigkeit eines Ladezustandsgleichs, zur Initiierung einer Vorbereitungsphase für den Ladezustandsausgleich und zur Initiierung einer Durchführungsphase für den Ladezustandsausgleich, und
- einem mit der Steuereinheit (4, 5) verbundenen Modul (6) zur statistischen Erfassung von Daten über die Fahrtzeiten, Stillstandszeiten und Stillstandsorte des Fahrzeugs.

13. Verfahren nach Anspruch 12,
**dadurch gekennzeichnet, dass**
sie ein Navigationssystem (8) aufweist, welches zur Lieferung von Informationen über die Fahrzeugposition an das Modul (6) vorgesehen ist.

14. Vorrichtung nach Anspruch 12 oder 13,
**dadurch gekennzeichnet, dass**
sie einen Bordcomputer (7) aufweist, welcher zur Lieferung von Daten an das Modul (6) vorgesehen ist.

15. Vorrichtung nach Anspruch 14,
**dadurch gekennzeichnet, dass**
die vom Bordcomputer (7) abgeleiteten Daten Informationen über die Uhrzeit, den Wochentag und/ oder die Fahrtzeit seit dem Anlassen des Fahrzeugs enthalten.

16. Vorrichtung nach einem der Ansprüche 12 - 15,
**dadurch gekennzeichnet, dass**
das Modul (6) dazu vorgesehen ist, aus den ihm zugeführten Informationen die am häufigsten angefahrenen Stillstandsorte des Fahrzeugs zu erfassen, die durchschnittliche Stillstandsdauer an den am häufigsten angefahrenen Stillstandsorten zu ermitteln, für jeden der am häufigsten angefahrenen Stillstandsorte zu überprüfen, ob die zugehörige Stillstandsdauer größer ist als die zu einem Ladezustandsausgleich benötigte Zeitdauer, und, wenn dies der Fall ist, zu einem Hinterlegen des jeweiligen Stillstandsortes als geeigneter Ort für die Durchführungsphase.

17. Vorrichtung nach einem der Ansprüche 12 - 16,
**dadurch gekennzeichnet, dass**
die Steuereinheit das Batteriemanagement (4) und das Fahrzeugsteuergerät (5) umfasst.

18. Vorrichtung nach Anspruch 17,
**dadurch gekennzeichnet, dass**
das Batteriemanagement (4) zur Detektion des Ladezustands der Fahrzeugbatterie (1) dient.

19. Vorrichtung nach Anspruch 17 oder 18,
**dadurch gekennzeichnet, dass**
das Batteriemanagement (4) nach erkannter Notwendigkeit eines Ladezustandsausgleichs dem Modul (6) ein Initialisierungssignal zuführt.

20. Vorrichtung nach Anspruch 19,
**dadurch gekennzeichnet, dass**
das Modul (6) die aktuelle Fahrzeugposition und Uhrzeit mit hinterlegten Werten für einen geeigneten Stillstandsort vergleicht und ein erstes Freigabesignal an die Steuereinheit (4, 5) ausgibt, wenn die aktuellen Daten die Initiierung einer Vorbereitungsphase für den Ladezustandsausgleich erlauben.

21. Vorrichtung nach Anspruch 20,
**dadurch gekennzeichnet, dass**
das Modul (6) ein zweites Freigabesignal an die Steuereinheit (4, 5) ausgibt, wenn das Fahrzeug einen geeigneten Stillstandsort erreicht hat.

F1, F2

F1, F2

EP 1 283 121 A2